(19) Europäisches Patentamt

European Patent Office

Office européen des brevets

(11) **EP 4 600 385 A1**

(12) **EUROPEAN PATENT APPLICATION**
published in accordance with Art. 153(4) EPC

(43) Date of publication:
**13.08.2025 Bulletin 2025/33**

(21) Application number: **23874914.7**

(22) Date of filing: **04.10.2023**

(51) International Patent Classification (IPC):
*C21D 8/12* (2006.01)     *C22C 38/00* (2006.01)
*C22C 38/06* (2006.01)     *B23K 26/073* (2006.01)
*B23K 26/364* (2014.01)     *H01F 1/147* (2006.01)

(52) Cooperative Patent Classification (CPC):
**B23K 26/073; B23K 26/364; C21D 8/12;**
**C22C 38/00; C22C 38/06; H01F 1/147**

(86) International application number:
**PCT/JP2023/036262**

(87) International publication number:
**WO 2024/075789 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.10.2022 JP 2022160270**

(71) Applicant: NIPPON STEEL CORPORATION
**Chiyoda-ku**
**Tokyo 100-8071 (JP)**

(72) Inventors:
• **YASUDA, Masato**
**Tokyo 100-8071 (JP)**
• **HAMAMURA, Hideyuki**
**Tokyo 100-8071 (JP)**
• **SUGIYAMA, Kimihiko**
**Tokyo 100-8071 (JP)**
• **MORISHIGE, Nobusato**
**Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTROMAGNETIC STEEL SHEET AND METHOD FOR MANUFACTURING SAME**

(57) The present invention has as its object to provide grain-oriented electrical steel sheet further improved in core loss in control of magnetic domains by forming laser grooves in steel sheet after decarburization annealing and before finish annealing.

The grain-oriented electrical steel sheet according to the present invention is a grain-oriented electrical steel sheet having a plurality of grooves on the surface of the steel sheet and provided with a glass coating on that surface, which grain-oriented electrical steel sheet characterized in that an absolute value of an angle θ formed by a direction perpendicular to both a rolling direction and sheet thickness direction of the steel sheet and a longitudinal direction of the grooves is 0 to 40°, a width W of the grooves is 20 to 300 $\mu$m, a depth D of the grooves is 10 to 40 $\mu$m, and a pitch P of the grooves in the rolling direction is 1.0 to 30 mm and in that the relationship of formula (1) is satisfied when a thickness of the glass coating of flat parts of the steel sheet surface (parts other than grooves) is t1 and the thickness of the glass coating at the deepest parts of the grooves is t2:

$$t2/t1 < 1.00 \ldots \text{formula (1)}$$

[FIG. 2]

EP 4 600 385 A1

**Description**

FIELD

The present invention relates to grain-oriented electrical steel sheet.

BACKGROUND

Grain-oriented electrical steel sheet is steel sheet controlled in crystal orientation by a combination of cold rolling and annealing so that the easy magnetization axes of crystal grains and the rolling direction match.
The crystal orientation is controlled by building in a primary recrystallization texture in annealing treatment after cold rolling treatment and further annealing at a high temperature to thereby cause preferential growth of an orientation preferable for the magnetic properties, that is, so-called secondary recrystallization. This control of the crystal orientation enables the hysteresis loss of the grain-oriented electrical steel sheet to be reduced.
As art for reducing eddy current loss, one type of core loss, of grain-oriented electrical steel sheet, grain-oriented electrical steel sheet comprised of a base steel sheet controlled in crystal orientation and an insulating coating formed on the surface is known. The insulating coating performs a role of not only providing electrical insulation, but also tension and rust resistance etc. to the base steel sheet.
Further, as another method for reducing abnormal eddy current loss, the method of control of magnetic domains forming distorted regions or grooves in a direction crossing the rolling direction at a predetermined pitch along the rolling direction to narrow the widths of the 180° magnetic domains (the 180° magnetic domain refining) is known. Methods for control of magnetic domains are classified into methods imparting distortion to a base steel sheet of grain-oriented electrical steel sheet and methods forming grooves in the surface of a base steel sheet having a coating giving tension at the base steel sheet.
By using grain-oriented electrical steel sheet controlled in magnetic domains by grooves, even if producing iron cores (wound cores) of transformers and applying straightening annealing, the grooves will not disappear, so the effects of magnetic domain refining can be maintained. For this reason, the method for control of magnetic domains using formation of grooves as the method for reducing abnormal eddy current loss is sometimes employed for wound cores.

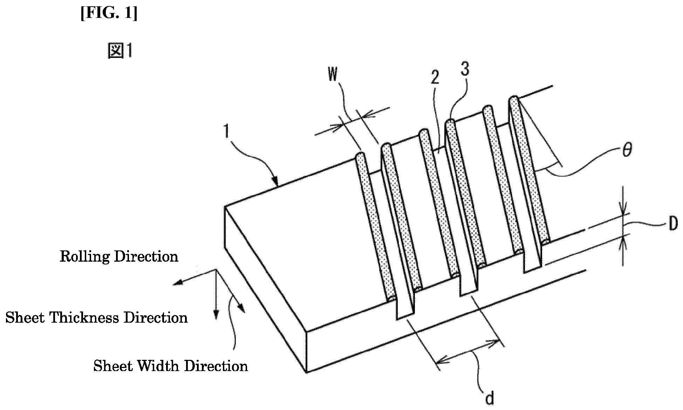

FIG. 1 is a view showing an outline of electrical steel sheet formed with grooves. In FIG. 1, the state is shown where the surface of the base steel sheet 1 is formed with a plurality of grooves 2 at a pitch in the rolling direction of the base steel sheet 1. In FIG. 1, the notation θ shows the angle formed by the direction perpendicular to the rolling direction and sheet thickness direction (sheet width direction) of the base steel sheet 1 and the longitudinal direction of the grooves 2. The notation W shows the width of the grooves, the notation D shows the depth of the grooves, and the notation P shows the pitch of the grooves 2 adjoining each other in the rolling direction.
Various methods for forming grooves in electrical steel sheet have been proposed.
For example, PTL 1 discloses an electrolytic etching method of using electrolytic etching to form grooves in the steel sheet surface of grain-oriented electrical steel sheet.
PTL 2 discloses a gear press method of mechanically pressing a gear against the steel sheet surface of grain-oriented electrical steel sheet to thereby form grooves in the steel sheet surface.
However, the gear press method suffers from wear of the gear teeth in a short period of time due to the high hardness of electrical steel sheet. Further, from the viewpoint of high speed processing, it is difficult to realize a line speed of 100 mpm or more like demanded in general ferrous metal manufacturing processes. The method using electrolytic etching is free from the problem of wear of the gear teeth, but steps of masking, etching, and mask removal are required. Compared with mechanical methods, there is the problem that the process becomes complicated.
PTL 3 discloses a lasering method of using lasering to melt and evaporate lasered parts of the steel sheet surface of grain-oriented electrical steel sheet. The lasering method has no problem of wear of gear teeth or a complicated process and also enables high speed processing.
Further, even in the lasering method, there have been several proposals for the groove-forming step. For example, PTL 4 is also a lasering method. Lasering a final product sheet coated with a tension insulating coating is disclosed. However, in that case, it is necessary to again coat an insulating tension coating. There is the problem of poor productivity.
On the other hand, PTL 5 discloses formation of grooves in cold rolled steel sheet. This method does not require recoating of an insulating tension coating and is excellent in productivity. However, there is the problem that in the subsequent decarburization annealing, the primary recrystallization texture degrades and the secondary recrystallization in the subsequent high temperature annealing is not manifested well.

[CITATIONS LIST]

[PATENT LITERATURE]

[PTL 1] Japanese Examined Patent Publication No. 62-54873
[PTL 2] Japanese Examined Patent Publication No. 62-53579
[PTL 3] Japanese Unexamined Patent Publication No. 2003-129135
[PTL 4] Japanese Unexamined Patent Publication No. 2012-087332
[PTL 5] WO2019/156127
[PTL 6] WO2011/007771

SUMMARY

[TECHNICAL PROBLEM]

The present invention was developed in consideration of the above problems and has as its goal to further improve the core loss in control of magnetic domains by forming laser grooves (grooves formed by lasering) in steel sheet and has as its object the provision of such grain-oriented electrical steel sheet.

[SOLUTION TO PROBLEM]

The inventors engaged in repeated intensive studies for solving the above problems. They discovered the conditions for keeping the primary recrystallization texture of parts formed with grooves by lasering from deteriorating in grain-oriented electrical steel sheet formed with laser grooves at the steel sheet after decarburization annealing and before finish annealing. The present invention was made based on this discovery and has as its gist the following:

[1] The grain-oriented electrical steel sheet according to one aspect of the present invention has a plurality of grooves on the surface of the steel sheet and is provided with a glass coating on that surface. The grain-oriented electrical steel sheet is characterized in that an absolute value of an angle $\theta$ formed by a direction perpendicular to both a rolling direction and sheet thickness direction of the steel sheet and a longitudinal direction of the grooves is 0 to 40°, a width W of the grooves is 20 to 300 $\mu$m, a depth D of the grooves is 10 to 40 $\mu$m, and a pitch P of the grooves in the rolling direction is 1.0 to 30 mm and in that the relationship of formula (1) is satisfied when a thickness of the glass coating of flat parts of the steel sheet (parts other than grooves) is t1 and the thickness of the glass coating at the deepest parts of the grooves is t2:

$$t2/t1 < 1.00 \ ... \ \text{formula (1)}$$

[2] The grain-oriented electrical steel sheet of another aspect of the present invention is the grain-oriented electrical steel sheet according to [1] characterized in that in the grain-oriented electrical steel sheet according to [1], the relationship of formula (2) is satisfied when a thickness of the glass coating of flat parts of the base steel sheet (parts other than grooves) is s1 and a thickness of anchoring parts of the glass coating at the deepest parts of the grooves is s2:

$$s2/s1 < 1.00 \ ... \ \text{formula (2)}$$

[3] A method of production of grain-oriented electrical steel sheet according to another aspect of the present invention is a method of producing the grain-oriented electrical steel sheet of the above [1] or [2], which method of production of grain-oriented electrical steel sheet characterized by including a groove forming step of forming grooves by lasering the surface of steel sheet after decarburization annealing and before finish annealing, in which a focused spot diameter dL of the laser beam in a rolling direction of the steel sheet and a focused spot diameter dC of the laser beam in a sheet width direction satisfy formula (3):

$$0.10 \leq dL/dC < 1.00 \ ... \ \text{formula (3)}$$

[ADVANTAGEOUS EFFECTS OF INVENTION]

According to the present invention, it is possible to provide grain-oriented electrical steel sheet controlled in magnetic domains by laser grooves and excellent in core loss.

BRIEF DESCRIPTION OF DRAWINGS

FIG. 1 is a view showing an outline of electrical steel sheet formed with grooves.
FIG. 2 is a schematic view of a cross-section of steel sheet at a cross-section vertical to the groove longitudinal direction near a groove.

DESCRIPTION OF EMBODIMENTS

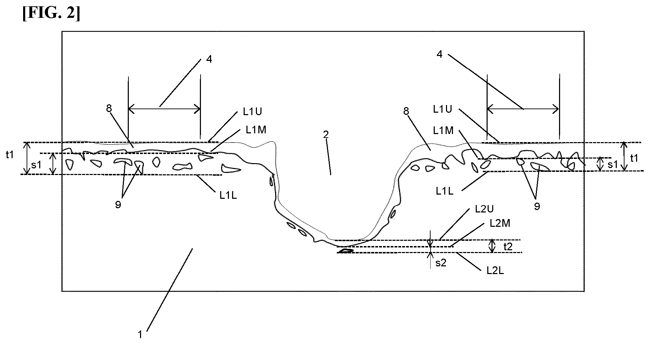

Hereafter, the present invention will be explained using the grain-oriented electrical steel sheet according to one embodiment of the present invention (hereafter, abbreviated as the "present electrical steel sheet") as an example.
The present electrical steel sheet, as shown in FIGS. 1 and 2, is comprised of a base steel sheet 1 having a plurality of grooves 2 on its surface and a glass coating 8 formed on the surface of the base steel sheet 1. In the present electrical steel sheet, a tension coating (insulating coating) (not shown) may be formed on the surface of the glass coating 8. As shown in FIG. 1, at the surface of the base steel sheet 1, the plurality of grooves 2 are formed so as to adjoin each other in a rolling direction of the base steel sheet 1. The direction (angle 0) of the grooves and the width W, depth D, and pitch P of the grooves are determined in consideration of the core loss in the same way as usual grain-oriented electrical steel sheet.

<Angle $\theta$ Formed by Longitudinal Direction of Base Steel Sheet and Longitudinal Direction of Grooves>

If the angle $\theta$ formed by the direction perpendicular to the rolling direction and sheet thickness direction of the base steel sheet (sheet width direction) and the longitudinal direction of the grooves is too large, there is no effect of control of the magnetic domains and the effect of improvement of the core loss can no longer be obtained, so this may be 0 to 40° (0° or more and 40° or less). The angle $\theta$ is preferably small and may be made 35° or less, 30° or less, 25° or less, 20° or less, 15° or less, 10° or less, 8° or less, 6° or less, or 5° or less. The lower limit of the angle $\theta$ is 0°, that is, when the longitudinal direction of the grooves is parallel to the sheet width direction. Note that the direction of the angle $\theta$ is not in question. It indicates the acute angle side angle in the angle formed by the longitudinal direction of the grooves and a sheet width direction. The surface of the base steel sheet is provided with a plurality of grooves arranged substantially in parallel, but it is sufficient that the angle $\theta$ for each groove be the above such range.

<Groove Width W>

The groove width W indicates the width of the grooves at the base steel sheet surface at the cross-section of the grooves at the surface vertical to the longitudinal direction of the grooves (groove cross-section). The groove width W may be 20 $\mu$m or more since if too narrow, no starting points of formation of magnetic poles will be formed, there will be no effect of control of magnetic domains, and excellent core loss will not be obtained. On the other hand, the groove width W may be 300 $\mu$m or less since if too broad, no starting points of formation of magnetic poles will be formed, there will be no effect of control of magnetic domains, only the magnetic flux density will end up remarkably falling, and excellent core loss will not be obtained. Therefore, the groove width W may be 20 to 300 $\mu$m (20 $\mu$m or more and 300 $\mu$m or less). The lower limit of the groove width W is preferably 25 $\mu$m, 30 $\mu$m, or 35 $\mu$m. The upper limit of the groove width W is preferably 250 $\mu$m, 200 $\mu$m, 150 $\mu$m, 100 $\mu$m, or 80 $\mu$m.

<Groove Depth D>

If the depth D of the grooves is too shallow, no starting points of formation of magnetic poles will be formed, there will be no effect of control of magnetic domains, and excellent core loss will not be obtained, so it may be 10 $\mu$m or more. On the other hand, if too deep, the effect of control of magnetic domains ends up reaching saturation and only the magnetic flux density remarkably falls, so excellent core loss cannot be obtained, therefore it may be 40 $\mu$m or less. Therefore, the depth D of the grooves may be 10 to 40 $\mu$m (10 $\mu$m or more and 40 $\mu$m or less). The lower limit of the groove depth D is preferably 11 $\mu$m, 12 $\mu$m, 13 $\mu$m, 14 $\mu$m, or 15 $\mu$m. The upper limit of the groove depth D is preferably 38 $\mu$m, 36 $\mu$m, 34 $\mu$m, 32 $\mu$m, 30 $\mu$m, 28 $\mu$m, or 26 $\mu$m.

<Groove Pitch P>

The groove pitch P is the pitch of center lines of the adjoining grooves in the longitudinal direction in grooves arranged substantially in parallel at the base steel sheet surface and indicates a distance in the rolling direction of the base steel sheet. The "center line of a groove" is a line parallel with the longitudinal direction of the groove and running through the center point of the groove at the base steel sheet surface at the groove cross-section. If the groove pitch P is too narrow, the effect of control of the magnetic domains becomes saturated, just the magnetic flux density remarkably falls, and good core loss cannot be obtained, so the pitch may be 1 mm or more. On the other hand, if too broad, the effect of control of the magnetic domains is not sufficiently obtained and good core loss cannot be obtained, so the pitch may be 30 mm or less. For this reason, the groove pitch P may be 1 to 30 mm (1 mm or more and 30 mm or less). Further, the pitch P of the grooves need not be equal pitches, but it is sufficient that the groove pitch P with the adjoining grooves be in the above range. The lower limit of the groove pitch P is preferably 1.2 mm, 1.4 mm, 1.5 mm, 1.6 mm, 1.8 mm, or 2.0 mm. The upper limit of the groove pitch P is preferably 25 mm, 20 mm, 15 mm, 10 mm, 7 mm, or 5 mm.

<Thickness of Glass Coating>

The glass coating of the flat parts of the base steel sheet in the present electrical steel sheet (indicates parts at steel sheet surface where no grooves are formed, that is, parts other than the grooves, which are separated from the groove edges by 1/2 or more of the groove width, hereafter, sometimes simply referred to as the "flat parts") and the recessed parts of the laser grooves (hereafter, sometimes simply referred to as the "grooves") will be explained using FIG. 2.

FIG. 2 is a cross-sectional view of a cross-section vertical to the groove longitudinal direction of a groove recessed part and a view showing the region including the groove. Hereafter, unless particularly indicated otherwise, the explanation will be given based on the cross-sectional view of the cross-section vertical to the longitudinal direction of the groove (FIG. 2).

The present electrical steel sheet is grain-oriented electrical steel sheet characterized in that the relationship of formula (1) is satisfied when the thickness of the glass coating at the flat parts of the base steel sheet is "t1" and the thickness of the glass coating at the deepest parts of the grooves at the recessed parts of the groove is "t2":

$$t2/t1 < 1.00 \ ... \ \text{formula (1)}$$

The coating thicknesses t1, t2 of the parts will be explained. The glass coating of the present electrical steel sheet has an anchoring structure such as shown in FIG. 2. The "anchoring structure" means a structure where spikes of the glass coating extend into the base steel sheet like the roots of a plant. The parts where the glass coating is anchored into the steel sheet like the roots of a plant will be referred to as the "anchoring parts" of the glass coating. For this reason, at the cross-section of the steel sheet, sometimes the bottom end parts of the anchoring structure appear in a state separated from the glass coating. For example, in FIG. 2, glass coating anchoring parts 9 can be confirmed appearing like isolated islands separated from the flat parts and glass coating 8 at the surfaces of the groove recessed parts, but this is because the cross-sections of the bottom end parts of the glass coating anchoring parts 9 forming the anchoring structure are observed. Hereafter, the "bottom ends of the glass coating" indicate parts the furthest separated from the glass coating surface including not only the glass coating 8 in the cross-section of the steel sheet vertical to the groove longitudinal direction, but also the glass coating anchoring parts 9 of the parts of the anchoring structure appearing to be present separated from the glass coating.

Hereafter, the method of measurement of the thicknesses t1, t2 of the glass coating at the different parts will be explained by FIG. 2.

As shown in FIG. 2, the line showing the surface of the glass coating at the flat parts 4 is labeled as L1U and the line passing through the bottom ends at the deepest parts in the sheet thickness direction among the bottom ends of the anchoring structure of the glass coating at the flat parts and parallel to LIU is labeled as L1L.

The line passing through the surface of the glass coating at the deepest part of the groove (point becoming deepest part in sheet thickness direction at the contour of the groove) and parallel to L1U is labeled as L2U. Further, the line passing through the bottom end at the deepest part in the sheet thickness direction among the bottom ends of the anchoring structure of the glass coating near the deepest part of the groove and parallel to L2U is labeled as L2L.

The glass coating thickness t1 of the flat parts is defined as the distance from L1U to L1L, while the glass coating thickness t2 of the deepest part of the groove is defined as the distance from L2U to L2L.

The thickness t1 of the glass coating at the flat parts of the base steel sheet, as shown in FIG. 2, is the distance from the surface of the glass coating to the bottom end of the glass coating anchoring structure, that is, the maximum value of the glass coating anchoring structure at the flat parts.

In the recessed parts of the grooves, the glass coating thickness t2 of the deepest parts of the grooves, as shown in FIG. 2, is the distance from the surface of the glass coating at the deepest parts of the grooves to the bottom end of the anchoring structure of the glass coating, that is, the maximum value of the glass coating anchor depth at the deepest parts of the grooves.

The thickness of the glass coating can, for example, be measured by polishing a cross-section of the steel sheet, then examining it by an optical microscope or SEM. The range of observation for measuring the anchor depth of the glass coating may be made a range including distances of the same extent as the groove width at the two sides of the grooves. That is, the range of observation, in the cross-section vertical to the groove longitudinal direction, may be made the length in the rolling direction of the amounts of groove width at the two sides straddling the grooves (that is, length of three times or more the groove width centered about the grooves) and the length in the sheet thickness direction of 2 times or so of the groove depth. The glass coating thickness at the flat parts is measured in a range of distance from the groove edges of 1/2 or more of the groove width up to the groove width W for one side of the grooves (left side or right side across a groove in FIG. 2) each. The average value (arithmetic average value) is made the thickness of the glass coating at the flat parts.

Next, the effect of improvement of the core loss by the glass coating thickness t2 of the deepest parts of the grooves being thinner than the glass coating thickness t1 of the flat parts of the base steel sheet will be explained.

The magnetic domain refining at the grain-oriented electrical steel is realized due to the magnetostatic energy becoming higher due to the magnetic poles formed at the steel sheet surface, 180° domain walls being newly formed to deal with this, and the magnetic domain widths becoming narrower. If the magnetic domain widths become narrower, the distance of movement of the domain walls when the steel sheet is magnetized becomes shorter and the energy loss at the time of movement of the domain walls is reduced and the eddy current loss is reduced.

Further, by coating and baking on a glass coating different in expansion coefficient from the steel sheet at a high temperature, after cooling, due to the difference in expansion coefficients of the steel sheet and glass coating, tensile tension is applied in the rolling direction whereby the magnetic domains are refined and the eddy current loss is improved.

Furthermore, the glass coating is comprised of a nonmagnetic oxide and differs from the steel sheet in magnetic permeability, so magnetic poles are formed at the interfaces and the magnetic domains are refined. For this reason, the glass coating becomes starting points for formation of magnetic poles and promotes magnetic domain refining and thereby is believed to reduce the eddy current loss.

At the groove parts, tension is difficult to apply in the rolling direction, but if forming grooves in the direction at right angles to the rolling direction, magnetic poles are formed at the surfaces of the recessed parts of the grooves. Due to the synergistic effect with formation of magnetic poles by the glass coating, magnetic domain refining is promoted.

On the other hand, the glass coating is comprised of a nonmagnetic oxide, so if the glass coating is thick, the magnetic flux density falls and, as a result, if the glass coating is thick, the magnetic flux density falls and as a result the hysteresis loss deteriorates. The core loss at the electrical steel sheet is the total sum of the hysteresis loss and the eddy current loss. The glass coating is preferably controlled so that the core loss becomes the minimum.

Therefore, the inventors made the glass coating thickness of the flat parts, which account for the majority of the area when viewing the surface of the base steel sheet from above, thicker to secure starting points for formation of magnetic poles and promote magnetic domain refining, while at the steel sheet grooves, the grooves themselves function as starting points for formation of magnetic poles, so starting points for formation of magnetic poles due to the glass coating become unnecessary. That is, they discovered that in the steel sheet grooves, the core loss is improved by making the glass coating at the deepest parts of the grooves thinner to suppress the drop in magnetic flux density and that in the steel sheet as a whole, the core loss is improved by efficiently securing starting points for formation of magnetic poles.

That is, the inventors discovered that it is sufficient to control the glass coating thickness t1 of the flat parts of the base steel sheet and the glass coating thickness t2 of the deepest parts of the grooves so as to satisfy the t2/t1<1.00 of formula (1). Due to this, the glass coating comprised of a nonmagnetic oxide at the groove forming parts is controlled to become smaller than the glass coating of the flat parts of the base steel sheet. As a result, the drop in magnetic flux density is suppressed, the hysteresis loss does not deteriorate, and the total core loss is improved. t2/t1 is preferably 0.95 or less, 0.90 or less, 0.85 or less, 0.80 or less, 0.75 or less, 0.70 or less, 0.65 or less, 0.60 or less, 0.55 or less, or 0.50 or less. The lower limit of t2/t1 is not particularly limited and may be 0. Practically, t2/t1 may be 0.05 or more.

<Thickness of Anchoring parts of Glass Coating>

Preferably the relationship of formula (2) is satisfied when a thickness (depth) of the anchoring parts of the glass coating of the flat parts of the base steel sheet is s1 and the thickness (depth) of the anchoring parts of the glass coating at the deepest parts of the grooves is s2:

$$s2/s1 < 1.00 \ ... \ \text{formula (2)}$$

The fact that the glass coating exhibits an anchoring structure is as explained previously. It means a structure where spikes of the glass coating extend into the base steel sheet like the roots of a plant. The "anchoring parts of the glass coating" indicate parts where the glass coating is anchored in the steel sheet like the roots of a plant. The "thickness of the anchoring parts" mean the depth in the steel sheet thickness direction where the anchoring parts are anchored.

The thickness s1 of the anchoring parts of the glass coating at the flat parts of the steel sheet is the distance between the deepest parts of the parts of the glass coating of the flat parts of the base steel sheet appearing to continue from the surface and the deepest parts of the glass coating including the bottom ends of the anchoring parts of the glass coating appearing like isolated islands.

The thickness s2 of the anchoring parts of the glass coating at the deepest parts of the grooves is the distance between the deepest parts of the parts of the glass coating of the deepest parts of the grooves of the base steel sheet appearing to continue from the surface and the deepest parts of the glass coating including the bottom ends of the anchoring parts of the glass coating.

The method of measurement of the anchoring part thicknesses s1, s2 of the glass coating of the different parts will be explained by FIG. 2. As shown in FIG. 2, the line passing through the deepest part of the parts where the glass coating 8 appears to continue from the surface among the bottom ends 9 of the anchoring structure of the glass coating of the flat parts 4 of the steel sheet and parallel to L1U is labeled as L1M. Further, the line passing through the deepest part of the parts where the glass coating appears to continue from the surface among the bottom ends of the anchoring structure of the glass coating in the vicinity of the deepest parts of the grooves and parallel to L2U is labeled as L2M. The thickness s1 of the anchoring parts of the glass coating of the flat parts is defined as the distance from L1U to L1M, and the thickness s2 of the anchoring parts of the glass coating of the deepest parts of the grooves is defined as the distance from L2U to L2M.

The thickness of the anchoring parts of the glass coating, for example, like the thickness of the glass coating, can be measured by polishing a cross-section of the steel sheet, then examining it by an optical microscope or SEM. The observed range for measuring the thickness of the anchoring parts of the glass coating is similar to the thickness of the glass coating. Further, the method for finding the thickness of the anchoring parts at the flat parts, like the thickness of the glass coating, is to obtain the average of the measured values at the flat parts at the two sides straddling the grooves.

The effect of improvement of the core loss due to the thickness s2 of the anchoring parts of the glass coating at the deepest parts of the grooves becoming thinner than the thickness s1 of the anchoring parts of the glass coating at the flat parts of the base steel sheet is believed to be as follows: That is, the anchoring structure of the glass coating is guessed to more easily form starting points of formation of magnetic poles and become greater in effect of the magnetic domain refining compared with the continuous glass coating present at the surface side of the base steel sheet. On the other hand, at the recessed parts of the laser grooves, the grooves themselves become starting points of formation of magnetic poles. Even if anchoring parts of the glass coating are formed at sides deeper than the grooves, not only is the effect of formation of magnetic poles small, but conversely the magnetic flux density falls and the hysteresis loss deteriorates. Further, if the anchoring parts penetrate deeper, anchoring parts of complicated structures are formed and may possibly cause that much greater deterioration of the magnetic properties.

That is, the inventors discovered that it is sufficient to control the thickness s1 of the anchoring parts of the glass coating at the flat parts of the base steel sheet and the thickness s2 of the anchoring parts of the glass coating of the deepest parts of the grooves so as to satisfy the s2/s1<1.00. Due to this, it is possible to make the glass coating anchoring parts of the deepest parts of the grooves thinner to keep down the complication of the anchoring structure, so it is possible to suppress the drop in magnetic flux density and improve the total core loss. The value of s2/s1 is preferably 0.95 or less, 0.90 or less, 0.85 or less, 0.80 or less, 0.75 or less, 0.70 or less, 0.65 or less, 0.60 or less, 0.55 or less, or 0.50 or less. The lower limit of s2/s1 is not particularly limited and may be 0. Practically, s2/s1 may be 0.05 or more.

<Method of Production>

First, a known method is used to produce cold steel sheet for the present electrical steel sheet. The steel sheet constituents and the method of production of the steel sheet are not particularly limited. A known method, for example, the steel sheet constituents and method of production of steel sheet described in PTL 6, can be employed.

<Decarburization Annealing>

Next, a known method can be used decarburization annealing. In accordance with need, nitriding annealing may also be performed.

As the decarburization conditions, known conditions can be employed. For example, it is preferable to raise the steel sheet in temperature to 850°C, then hold it there for 60 seconds, then cool it. The decarburization atmosphere is preferably a hydrogen-inert gas atmosphere with a $P_{H2O}/P_{H2}$ made 0.15 to 0.65 in range. Good properties are obtained in particular near 0.33. The nitriding may also be performed employing a known method. The amount of nitriding can be made, for example, 50 to 400 ppm in range, but good properties are particularly obtained near 200 ppm.

<Groove Forming Step: Formation of Grooves by Laser>

The steel sheet obtained by decarburization annealing or nitriding annealing after decarburization annealing is lasered to thereby form a plurality of grooves at a predetermined pitch in the direction crossing the rolling direction (groove forming step). Among the lasering conditions, the type of the laser source, laser output, laser scan speed, and speed of movement of the steel sheet at the time of lasering are not particularly limited, but the conditions giving a groove width W, groove depth D, and predetermined pitch of the grooves (groove pitch P) within prescribed ranges may be suitably selected.

[Laser Source]

As the laser source, for example, a fiber laser, YAG laser, semiconductor laser, $CO_2$ laser, or other high output laser generally industrially used can be used. If it is possible to stably form the grooves, a pulse laser or a continuous wave laser can be also used.

[Laser Output]

If the laser output is too small, the laser scan speed for forming the desired grooves remarkably falls and industrial productivity falls, so the output may be 200W or more. Preferably, it is 1000W or more, more preferably 1500W or more. Further, if the laser output is too large, the power capacity becomes large and the capital costs become enormous, so this is not practical industrially, therefore the output may be made 3000W or less. Preferably, it is 2800W or less, more preferably 2500W or less.

[Laser Scan Speed]

If the laser scan speed is too slow, the productivity falls, so the speed is made 5 m/s or more. Preferably it may be 20 m/s or more, more preferably 40 m/s or more. Further, if the laser scan speed is too fast, higher output becomes necessary and the capital costs increase, so the speed is made 100 m/s or less. Preferably it is 80 m/s or less, more preferably 60 m/s or less.

[Shape of Focused Spot of Laser Beam]

As the conditions for lasering, for example, the focused spot diameter dL of the laser beam in the rolling direction may be made 5 to 100 $\mu$m, the focused spot diameter dC of the laser beam in the sheet width direction may be made 5 to 100 $\mu$m, the laser output may be made 200 to 3000W, the laser scan speed may be made 5 m/s to 100 m/s, and formula (3) may be satisfied:

$$0.10 \leq dL/dC < 1.00 \ldots \text{ formula (3)}$$

If dL/dC is 1 or more, the laser spot diameter becomes an oval shape long in the rolling direction, so control of the laser groove shape becomes difficult. The spot diameter ratio dL/dC may be made smaller than 1.00. The upper limit is preferably 0.90 or less, 0.80 or less, 0.70 or less, 0.60 or less, or 0.50 or less.
If dL/dC is smaller than 0.10, the laser spot diameter becomes an oval shape ultralong in the sheet width direction, so control of the laser groove shape becomes difficult. Therefore, the spot diameter ratio dL/dC may be larger than 0.1. The lower limit is preferably 0.15 or more or 0.20 or more.
The mechanism by which the lasering conditions contribute to control of thickness of the glass coating of the groove recessed parts is believed to be as follows:
First, in regions not lasered (flat parts), the internal oxidation layer $SiO_2$ formed inside the base steel sheet in the decarburization annealing and the annealing separator MgO coated on the surface of the steel sheet before the finish annealing react at the high temperature of 1200°C at the finish annealing step to form the glass coating of an oxide comprised of $Mg_2 SiO_4$.
On the other hand, in the laser groove parts, the internal oxidation layer formed in the decarburization annealing before lasering is removed by laser, so the base iron becomes exposed at the groove inside surfaces. At this time, melt parts remain along the groove side surfaces, but the melt parts grow oriented at the time of solidification and columnar crystals are formed. If columnar crystals grow, the grain boundaries of the columnar crystals become paths for diffusion of oxygen and an internal oxidation layer is formed. In the following finish annealing, the moisture of the annealing separator MgO slurry causes the base iron part to oxidize, but at this time, oxygen diffuses along the grain boundaries of the columnar crystals causing oxidation wherein an internal oxidation layer ($SiO_2$) is formed at the groove side surfaces. The $SiO_2$ newly formed along the groove parts, in the same way as the flat parts, react with the MgO whereby a glass coating is formed.

Therefore, if making the spot diameter ratio dL/dC less than 1.00 to make the shape of the laser spot an oval shape long in the direction at a right angle to the rolling direction (sheet width direction), the heat input to the steel sheet becomes smaller, columnar crystals are formed thin along the groove side surfaces, the diffusion paths are limited, and the internal oxidation layer does not develop more. As a result, the glass coating at the deepest parts of the grooves is formed thin.

Further, to control t2/t1 to <0.90, the upper limit of the spot diameter ratio dL/dC may be made 0.90 and is preferably 0.80 or less, 0.70 or less, 0.60 or less, or 0.50 or less.

[Assist Gas]

At the same time as lasering, assist gas is sprayed at portions of the steel sheet where the laser beam is fired. The assist gas performs the role of removing the constituents melting or vaporizing from the steel sheet due to the lasering. By spraying the assist gas, the laser beam stably reaches the steel sheet, so the grooves are stably formed. The flow rate of the assist gas is, for example, preferably made 10 to 1000 liters per minute. Further, the assist gas is preferably air or an inert gas.

<Coating Annealing Separator>

After that, the surface of the steel sheet is coated with an annealing separator. The finish annealing explained later is sometimes performed in a state with the steel sheet wound into a coil. If performing finish annealing in such a state, sometimes parts of the coil sticks together and the coil becomes difficult to unwind. Therefore, in the present embodiment, the annealing separator is coated to enable the coil to be unwound after finish annealing. Therefore, the main constituent of the annealing separator is MgO. The MgO in the annealing separator reacts in a solid phase with the $SiO_2$ in the internal oxidation layer at the time of finish annealing and a glass coating is formed. For the composition of the annealing separator, a known one can be employed. For example, it can be made MgO: 100 parts by mass and $TiO_2$ : 5 parts by mass to which, for example, $FeCl_2$ is added to 200 ppm by chlorine.

To make the thickness of the glass coating of the groove parts smaller, the moisture content after drying may be adjusted in accordance with need when coating the annealing separator on the steel sheet surface. If the moisture content of the annealing separator becomes too small, the glass coating is insufficiently formed and the appearance becomes poor, so the content is made 0.5% or more. On the other hand, if the moisture content of the annealing separator is too great, the glass coating thickness becomes excessive and the magnetic properties sometimes deteriorate, so the content may be made 6.0% or less. That is, the moisture content of the annealing separator may be 0.5% or more and 6.0% or less.

The moisture content of the annealing separator can, for example, be calculated by recovering the annealing separator from the steel sheet surface before the finish annealing, measuring the weight, raising the temperature to 1000°C, then again measuring the weight and finding the weight difference before and after raising the temperature. At the time of raising the temperature to 1000°C, a crucible may be used.

<Finish Annealing>

The finish annealing step is also referred to as the secondary recrystallization annealing step and is a step forming a glass coating simultaneously while promoting secondary recrystallization of the steel sheet structure. The finish annealing step is formed by a step of winding up a steel sheet coated with an annealing separator into a coil, holding it at a temperature of 1150 to 1250°C for 10 to 30 hours, then cooling it.

The dew point temperature of the atmospheric gas supplied to the finish annealing furnace may be 0°C or less. If the dew point temperature is more than 0°C, the glass coating thickness becomes excessive and sometimes the magnetic properties deteriorate, so this is not preferable.

<Formation of Tension Coating>

It is possible to impart tension to steel sheet by just a glass coating, but to improve the effect of control of the magnetic domains, usually a tension coating (insulating coating) is formed on the glass coating. The tension coating can, for example, be made one mainly comprised of aluminum phosphate and the thickness can be made 1 $\mu$m.

EXAMPLES

Next, examples of the present invention will be explained. The conditions at the examples just show one embodiment of the present invention. The present invention is not limited to this single embodiment.

<Example 1>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was used as a material for hot rolling, then annealing by a known method and then was cold rolled to obtain steel sheets A1 to A11 and a1 to a10 having a 0.22 mm final sheet thickness.

The cold rolled steel sheet was decarburized and annealed and further nitrided. The decarburization annealing conditions were raising the steel sheet in temperature to 850°C, then holding it there for 60 seconds and cooling. The decarburization atmosphere was made a hydrogen-nitrogen atmosphere with a $P_{H_2O}/P_{H_2}$ adjusted to 0.15 to 0.65 in range. Further, the amount of nitriding was made with 200 ppm.

After that, the surfaces of the steel sheets were lasered to form a plurality of grooves extending in a direction crossing the rolling direction at 1 to 40 mm pitch along the rolling direction. The groove forming direction was made a direction slanted by 0 to 45° in the L-direction (rolling direction) from the C-direction (steel sheet with direction) of the steel sheets. The groove depth was made 5 to 45 $\mu$m. The groove width was made 15 to 400 $\mu$m.

The lasering conditions were adjusted to a laser output of 2000W, a focused spot diameter of the laser beam in the rolling direction of 5 to 100 $\mu$m, a focused spot diameter of the laser beam in the sheet width direction of 5 to 100 $\mu$m, and a laser scan speed of 5 to 100 m/s.

At the time of lasering, assist gas of air was sprayed by 100 liters/min for efficiently removing the metal of the steel sheet melting and evaporating due to the laser.

After that, the annealing separator mainly comprised of MgO was coated give an amount of coating of 4 g/m$^2$ per side. The composition of the annealing separator was made MgO: 100 parts by mass and TiO$_2$: 5 parts by mass plus FeCl$_2$: 200 ppm by chlorine. The water content of the annealing separator was 2.5%.

After that, the steel sheets coated with the annealing separator were wound up into coil shapes, held at 1200°C for 20 hours, then cooled to form glass coatings on their surfaces. The dew point temperature of the atmospheric gas supplied to the finish annealing furnace was -20°C. Further, tension coatings mainly comprised of aluminum phosphate were formed to a thickness of 1 $\mu$m to obtain grain-oriented electrical steel sheets. The tension at that time was made 12 MPa in the rolling direction including the glass coatings.

The core loss $W_{17/50}$ after imparting the tension insulating coatings (energy loss measured under excitation conditions of 1.7T and 50Hz) and the magnetic flux density B8 (magnetic flux density at a magnetizing force of 800A/m) were measured. The results are shown in Table 1.

In each of Invention Examples A1 to A11 and Comparative Examples a1 to a10, the absolute value of the angle θ formed with the longitudinal direction of the grooves was 0 to 40°, the width W of the grooves was 20 to 300 $\mu$m, the depth D of the grooves was 10 to 40 $\mu$m, and the pitch P of the grooves in the rolling direction was 1.0 to 30 mm in range. In each of Invention Examples A1 to A11 satisfying formula (3) simultaneously, the core loss was better than 0.075W/kg.

<Example 2>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was used as a material for hot rolling, then annealing by a known method and then was cold rolled to obtain steel sheets B1 to B4 and b1 to b4 having a 0.22 mm final sheet thickness.

The cold rolled steel sheet was decarburized and annealed and further nitrided. The decarburization annealing conditions were raising the steel sheet in temperature to 850°C, then holding it there for 60 seconds and cooling. The decarburization atmosphere was made a hydrogen-nitrogen atmosphere with a $P_{H_2O}/P_{H_2}$ adjusted to 0.10 to 0.80 in range. Further, the amount of nitriding was made 200 ppm.

After that, the surfaces of the steel sheets were lasered to form a plurality of grooves extending in a direction crossing the rolling direction at a 5 mm pitch along the rolling direction. The groove forming direction was made a direction slanted by 10° in the L-direction (rolling direction) from the C-direction (steel sheet with direction) of the steel sheets. The groove depth was made 20 $\mu$m. The groove width was made 50 $\mu$m.

The lasering conditions were adjusted to a laser output of 2000W, a focused spot diameter of the laser beam in the rolling direction of 5 to 100 $\mu$m, a focused spot diameter of the laser beam in the sheet width direction of 5 to 100 $\mu$m, and a laser scan speed of 5 to 100 m/s.

At the time of lasering, assist gas of air was sprayed by 100 liters/min for efficiently removing the metal of the steel sheet melting and evaporating due to the laser.

After that, the annealing separator mainly comprised of MgO was coated give an amount of coating of 4 g/m$^2$ per side. The composition of the annealing separator was made MgO: 100 parts by mass and TiO$_2$: 5 parts by mass plus

$FeCl_2$ : 200 ppm by chlorine. The water content of the annealing separator was 1.5%.

After that, the steel sheets coated with the annealing separator were wound up into coil shapes, held at the maximum temperature of 1200°C for 20 hours, then cooled to form glass coatings on their surfaces. The dew point temperature of the atmospheric gas supplied to the finish annealing furnace was -10°C. Further, tension coatings mainly comprised of aluminum phosphate were formed to a thickness of 1 $\mu$m to obtain grain-oriented electrical steel sheets. The tension at that time was made 12 MPa in the rolling direction including the glass coatings.

The core loss $W_{17/50}$ after imparting tension insulating coatings (energy loss measured under excitation conditions of 1.7T and 50Hz) and the magnetic flux density B8 (magnetic flux density at a magnetizing force of 800A/m) were measured. The results are shown in Table 2.

In Invention Examples B1 to B4 and Comparative Examples b1 to b4, the conditions of the groove angle, groove depth, groove pitch, and groove width affecting the core loss are all the same, but in each of the comparative examples, the focused spot diameter did not satisfy formula (3) and the core loss became inferior.

<Example 3>

In the samples prepared at Example 2, the results of measurement of the anchoring part thickness s1 of the glass coating at the flat parts of the base steel sheet and anchoring part thickness s2 of the glass coating at the deepest part of the groove at the recessed part of the grooves are shown in Table 2. The core loss became excellent when the relationships of 2/t1<1.00 and s2/s1<1.00 were satisfied.

[Table 1]

| No. | Lasering conditions Focused spot diameter ratio dL/dC | Decarburization annealing conditions Oxygen potential PH2O/PH2 | Grooves Angle θ (°) | Grooves Width W (μm) | Grooves Depth D (μm) | Grooves Pitch P (mm) | Glass coating thickness Steel sheet surface flat part t1 (μm) | Glass coating thickness Groove deepest part t2 (μm) | Glass coating thickness t2/t1 ratio | Evaluation of properties Magnetic flux density B8 (T) | Evaluation of properties Core loss W17/50 (W/kg) | Remarks |
|---|---|---|---|---|---|---|---|---|---|---|---|---|
| A1 | 0.15 | 0.33 | 0 | 50 | 25 | 3 | 5.0 | 2.0 | 0.40 | 1.899 | 0.732 | Ex. |
| A2 | 0.20 | 0.25 | 35 | 50 | 25 | 5 | 4.0 | 1.0 | 0.25 | 1.892 | 0.741 | Ex. |
| A3 | 0.30 | 0.45 | 10 | 25 | 30 | 5 | 6.0 | 1.5 | 0.25 | 1.893 | 0.742 | Ex. |
| A4 | 0.50 | 0.40 | 10 | 250 | 30 | 5 | 4.0 | 2.0 | 0.50 | 1.888 | 0.739 | Ex. |
| A5 | 0.50 | 0.50 | 10 | 50 | 10 | 3 | 4.0 | 2.5 | 0.63 | 1.901 | 0.729 | Ex. |
| A6 | 0.50 | 0.35 | 10 | 50 | 35 | 3 | 5.0 | 4.0 | 0.80 | 1.900 | 0.733 | Ex. |
| A7 | 0.50 | 0.36 | 10 | 50 | 20 | 1 | 3.0 | 1.0 | 0.33 | 1.899 | 0.734 | Ex. |
| A8 | 0.60 | 0.40 | 10 | 50 | 20 | 25 | 3.0 | 1.0 | 0.33 | 1.897 | 0.735 | Ex. |
| A9 | 0.80 | 0.40 | 10 | 50 | 15 | 3 | 4.0 | 2.5 | 0.63 | 1.892 | 0.741 | Ex. |
| A10 | 0.80 | 0.36 | 10 | 50 | 15 | 3 | 4.0 | 2.0 | 0.50 | 1.893 | 0.740 | Ex. |
| A11 | 0.80 | 0.50 | 10 | 50 | 15 | 5 | 5.0 | 4.0 | 0.80 | 1.888 | 0.729 | Ex. |
| a1 | 0.50 | 0.20 | 45 | 50 | 30 | 3 | 4.0 | 3.0 | 0.75 | 1.892 | 0.753 | Comp. ex. |
| a2 | 0.50 | 0.25 | 20 | 15 | 30 | 3 | 4.0 | 2.0 | 0.50 | 1.901 | 0.752 | Comp. ex. |
| a3 | 0.50 | 0.30 | 20 | 400 | 20 | 3 | 5.0 | 3.0 | 0.60 | 1.899 | 0.751 | Comp. ex. |
| a4 | 0.50 | 0.40 | 20 | 50 | 5 | 5 | 5.0 | 4.0 | 0.80 | 1.896 | 0.755 | Comp. ex. |
| a5 | 0.50 | 0.40 | 20 | 50 | 45 | 5 | 3.0 | 2.0 | 0.67 | 1.896 | 0.761 | Comp. ex. |
| a6 | 0.50 | 0.50 | 20 | 50 | 20 | 0.4 | 5.0 | 4.0 | 0.80 | 1.888 | 0.788 | Comp. ex. |
| a7 | 0.60 | 0.35 | 20 | 50 | 20 | 40 | 4.0 | 2.0 | 0.50 | 1.887 | 0.798 | Comp. ex. |
| a8 | 1.70 | 0.36 | 20 | 50 | 15 | 5 | 4.0 | 6.0 | 1.50 | 1.886 | 0.755 | Comp. ex. |
| a9 | 1.30 | 0.30 | 20 | 50 | 15 | 5 | 3 | 5 | 1.67 | 1.888 | 0.762 | Comp. ex. |
| a10 | 1.50 | 0.30 | 20 | 50 | 30 | 5 | 4 | 7 | 1.75 | 1.892 | 0.765 | Comp. ex. |

[Table 2]

| No. | Lasering conditions Focused spot diameter ratio dL/dC | Decarburization annealing conditions Oxygen potential $PH_2O/PH_2$ | Grooves Angle θ (°) | Grooves Width W (μm) | Grooves Depth D (μm) | Grooves Pitch P (mm) | Glass coating thickness Steel sheet surface flat part t1 (μm) | Glass coating thickness Groove deepest part t2 (μm) | Glass coating thickness t2/t1 ratio | Evaluation of properties Magnetic flux density B8 (T) | Evaluation of properties Core loss W17/50 (W/kg) | Glass coating anchoring part thickness s2/s1 ratio | Remarks |
|---|---|---|---|---|---|---|---|---|---|---|---|---|---|
| B1 | 0.11 | 0.33 | 10 | 50 | 20 | 5 | 4.0 | 1.8 | 0.45 | 1.898 | 0.734 | 0.27 | Ex. |
| B2 | 0.95 | 0.33 | 10 | 50 | 20 | 5 | 4.0 | 2.1 | 0.53 | 1.888 | 0.742 | 0.78 | Ex. |
| B3 | 0.65 | 0.33 | 10 | 50 | 20 | 5 | 4.0 | 3.1 | 0.78 | 1.901 | 0.744 | 0.36 | Ex. |
| B4 | 0.65 | 0.33 | 10 | 50 | 20 | 5 | 4.0 | 2.8 | 0.70 | 1.899 | 0.732 | 0.41 | Ex. |
| b1 | 1.50 | 0.33 | 10 | 50 | 20 | 5 | 4.0 | 4.5 | 1.13 | 1.888 | 0.765 | 1.11 | Comp. ex. |
| b2 | 1.20 | 0.33 | 10 | 50 | 20 | 5 | 4.0 | 5.2 | 1.30 | 1.892 | 0.755 | 1.03 | Comp. ex. |
| b3 | 1.40 | 0.10 | 10 | 50 | 20 | 5 | 2.0 | 2.2 | 1.10 | 1.902 | 0.781 | 1.09 | Comp. ex. |
| b4 | 1.10 | 0.80 | 10 | 50 | 20 | 5 | 10.0 | 11.2 | 1.12 | 1.888 | 0.810 | 0.93 | Comp. ex. |

[INDUSTRIAL APPLICABILITY]

The present invention can be utilized for industrial equipment using grain-oriented electrical steel sheet such as wound cores for transformers.

REFERENCE SIGNS LIST

1. base steel sheet
2. groove
3. base steel sheet
4. flat part
8. glass coating
9. glass coating anchoring part
Θ. angle formed by direction perpendicular to rolling direction of base steel sheet (sheet width direction) and longitudinal direction of grooves
W. groove width
D. groove depth
d. groove pitch
t1. glass coating thickness of flat parts of base steel sheet
t2. glass coating thickness of deepest parts of groves

## Claims

1. Grain-oriented electrical steel sheet having a plurality of grooves on a surface of the steel sheet and provided with a glass coating on that surface, which grain-oriented electrical steel sheet **characterized in that** an absolute value of an angle θ formed by a direction perpendicular to both a rolling direction and sheet thickness direction of the steel sheet and a longitudinal direction of the grooves is 0 to 40°, a width W of the grooves is 20 to 300 $\mu$m, a depth D of the grooves is 10 to 40 $\mu$m, and a pitch P of the grooves in the rolling direction is 1.0 to 30 mm, and
when a thickness of the glass coating of flat parts being parts other than grooves of the steel sheet is t1 and the thickness of the glass coating at the deepest parts of the grooves is t2, the relationship of formula (1) is satisfied:

$$t2/t1 < 1.00 \dots \text{formula (1)}$$

2. The grain-oriented electrical steel sheet according to claim 1, **characterized in that**, **in that** grain-oriented electrical steel sheet, the relationship of formula (2) is satisfied when a thickness of anchoring parts of the glass coating of flat parts is s1 and a thickness of anchoring parts of the glass coating at the deepest parts of the grooves is s2:

$$s2/s1 < 1.00 \dots \text{formula (2)}$$

3. A method of production of grain-oriented electrical steel sheet according to claim 1, which method of producing the grain-oriented electrical steel sheet **characterized by** including a groove forming step of forming grooves by lasering the surface of steel sheet after decarburization annealing and before finish annealing, in which a focused spot diameter dL of the laser beam in a rolling direction of the steel sheet and a focused spot diameter dC of the laser beam in a sheet width direction satisfy formula (3):

$$0.10 \le dL/dC < 1.00 \dots \text{formula (3)}$$

[FIG. 1]

図1

Rolling Direction

Sheet Thickness Direction

Sheet Width Direction

[FIG. 2]

## INTERNATIONAL SEARCH REPORT

| International application No. |
| :--- |
| **PCT/JP2023/036262** |

| | |
| :--- | :--- |
| **A.** | **CLASSIFICATION OF SUBJECT MATTER** |

*C21D 8/12*(2006.01)i; *C22C 38/00*(2006.01)i; *C22C 38/06*(2006.01)i; *B23K 26/073*(2006.01)i; *B23K 26/364*(2014.01)i; *H01F 1/147*(2006.01)i
FI: C21D8/12 D; B23K26/073; B23K26/364; H01F1/147 183; C22C38/00 303U; C22C38/06; C21D8/12 B

According to International Patent Classification (IPC) or to both national classification and IPC

| | |
| :--- | :--- |
| **B.** | **FIELDS SEARCHED** |

Minimum documentation searched (classification system followed by classification symbols)

C21D8/12; C22C38/00; C22C38/06; B23K26/073; B23K26/364; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| :--- | :--- |
| **C.** | **DOCUMENTS CONSIDERED TO BE RELEVANT** |

| Category* | Citation of document, with indication, where appropriate, of the relevant passages | Relevant to claim No. |
| :---: | :--- | :---: |
| X | WO 2016/171130 A1 (NIPPON STEEL & SUMITOMO METAL CORP) 27 October 2016 (2016-10-27)<br>claims, paragraphs [0061], [0075], [0086], [0091], tables 1-4, fig. 1-3, 14B | 1-3 |
| A | WO 2022/013960 A1 (NIPPON STEEL CORP) 20 January 2022 (2022-01-20)<br>entire text, all drawings | 1-3 |
| A | WO 2019/156127 A1 (NIPPON STEEL CORP) 15 August 2019 (2019-08-15)<br>entire text, all drawings | 1-3 |
| E, X | WO 2023/195466 A1 (NIPPON STEEL CORP) 12 October 2023 (2023-10-12)<br>claims, tables 1-2, in particular, b1-b8, fig. 2 | 1-3 |
| E, X | WO 2023/195470 A1 (NIPPON STEEL CORP) 12 October 2023 (2023-10-12)<br>claims, tables 1-2 | 1-3 |

☐ Further documents are listed in the continuation of Box C.  ☑ See patent family annex.

| | | | |
| :--- | :--- | :--- | :--- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| :--- | :--- |
| **05 December 2023** | **19 December 2023** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/036262**

| Patent document cited in search report | | | Publication date (day/month/year) | Patent family member(s) | | | Publication date (day/month/year) |
|---|---|---|---|---|---|---|---|
| WO | 2016/171130 | A1 | 27 October 2016 | US 2018/0071869 A1 claims, paragraphs [0009], [0115], [0127], [0135], tables 1-4, fig. 1-3, 14B | | | |
| | | | | EP 3287533 | A1 | | |
| | | | | CN 107250392 | A | | |
| | | | | KR 10-2017-0107085 | A | | |
| WO | 2022/013960 | A1 | 20 January 2022 | US 2023/0175090 A1 entire text, all drawings | | | |
| | | | | EP 4123038 | A1 | | |
| | | | | KR 10-2022-0156644 | A | | |
| | | | | CN 115485414 | A | | |
| WO | 2019/156127 | A1 | 15 August 2019 | US 2020/0362431 A1 entire text, all drawings | | | |
| | | | | EP 3751013 | A1 | | |
| | | | | KR 10-2020-0103096 | A | | |
| | | | | CN 111684086 | A | | |
| WO | 2023/195466 | A1 | 12 October 2023 | (Family: none) | | | |
| WO | 2023/195470 | A1 | 12 October 2023 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62054873 B
- JP 62053579 B
- JP 2003129135 A
- JP 2012087332 A
- WO 2019156127 A
- WO 2011007771 A